# EUROPÄISCHE PATENTANMELDUNG

(11) **EP 2 522 567 A1**
(43) Veröffentlichungstag der Anmeldung: **14.11.2012**
(21) Anmeldenummer: 12167719.9
(22) Anmeldetag: 11.05.2012
(51) Int. Cl.: B62M 6/55

(54) **Tretlagereinheit für Kleinfahrzeuge mit Elektromotorunterstützung**

(30) Priorität: 12.05.2011 DE 102011050319
(71) Anmelder: Schuldt, Erwin, 84419 Schwindegg (DE)
(72) Erfinder: Schuldt, Erwin, 84419 Schwindegg (DE)
(74) Vertreter: Gustorf, Gerhard

(57) **Zusammenfassung**

Die Tretlagereinheit mit Elektromotorunterstützung ist für Kleinfahrzeuge vorgesehen, insbesondere für Fahrräder oder Dreiräder. Sie umfasst eine Tretlagerwelle (19) mit daran angebrachten Tretkurbeln (30). Auf der Tretlagerwelle (19) ist ein Elektromotor (25) mit einem damit gekoppelten Untersetzungsgetriebe (33) gelagert, die beide in einem gemeinsamen Gehäuse (21) untergebracht sind, das mit der Tretlagerwelle (19) eine Einheit bildet.

## Beschreibung

Die Erfindung betrifft eine elektromotorunterstützte Tretlagereinheit für Kleinfahrzeuge nach dem Oberbegriff des Anspruchs 1.

Nach dem Stand der Technik wird ein elektromotorunterstützter Zusatzantrieb als Radnabenmotor entweder im Vorderrad oder im Hinterrad montiert. Der Zusatzantrieb wird auch mittels eines Elektromotors im Bereich des herkömmlichen Tretlagers verbaut, der mit der Tretlagerwelle durch Kette, Zahnriemen oder Zahnräder verbunden ist.

Die Nachteile der bisher bekannten Lösungen können wie folgt zusammengefasst werden:
Radnabenmotor: Da der Radnabenmotor sehr geringe Umdrehungen haben muss (kein Getriebe ist direkt mit der Felge verbunden), kann ein geeignetes Drehmoment nur mit einer schweren Ausführung gebaut werden. Man kann die Schaltung des Fahrrades nicht nutzen. Es muss im direkten Gang angefahren werden (vergleichbar mit einem Auto, das im 4. Gang angefahren wird).

Zusatzantrieb am Tretlager: Großer Platzbedarf, der Motor muss in einer zweiten Wellenebene montiert und durch Kette, Zahnriemen oder Getriebe mit der Tretlagerwelle verbunden werden. Das bedeuten größeres Gewicht und Störanfälligkeit sowie schlechte Optik und leichtere Verschmutzung.

Aufgabe der Erfindung ist es, eine Einheit des Tretlagers zu entwickeln, in der alle Bauelemente wie Getriebe und Elektromotor auf einer Welle montiert sind.

Die Lösung dieser Aufgabe ergibt sich aus dem Patentanspruch 1. Vorteilhafte Weiterbildungen sind Gegenstand der Unteransprüche.

Bei der Erfindung wird der Elektromotor auf der Tretkurbelwelle gelagert und mit dem Getriebe verbunden, das ebenfalls auf der Tretkurbelwelle gelagert ist. Die kraftschlüssige Verbindung vom Getriebe zur Tretkurbelwelle erfolgt durch einen Freilauf.

Die elektromotorunterstützte Tretlagereinheit kann in einem speziellen Fahrradrahmen anstatt des herkömmlichen Tretlagers montiert werden und nimmt links und rechts je eine Tretkurbel mit Pedalen auf.

Eine vorteilhafte Variante ist Gegenstand des Anspruchs 9.

Die Vorteile der Erfindung sind:
Keine Übertragungselemente (Kette, Zahnriemen, Zahnräder) auf einer zweiten Welle, geringeres Gewicht, weniger Verschleißteile, bessere Energieausbeute, bessere Optik, der Elektromotor ist vollständig in der gesamten Fahrradschaltung integriert.

Bei einer vorteilhaften Weiterbildung der Erfindung sind auf der Tretlagerwelle die beiden Tretkurbeln über einen Freilauf gelagert.

Die Erfindung ist in zwei Ausführungsbeispielen in der Zeichnung dargestellt. Darin zeigen:
- Figur 1: eine Stirnansicht einer Einheit nach der Erfindung,
- Figur 2: eine Draufsicht auf die Einheit,
- Figur 3: einen Längsschnitt in der Ebene A-A der Figur 1,
- Figur 4: eine perspektivische Ansicht des Planetengetriebes von der Seite der 2. Getriebestufe,
- Figur 5: die Ansicht des Planetengetriebes von der Seite der 1. Getriebestufe,
- Figur 6: die Ansicht einer Tretkurbel,
- Figur 7: die Stirnansicht der Tretkurbel,
- Figur 8: einen Schnitt in der Ebene VIII - VIII der Figur 7,
- Figur 9: einen Längsschnitt durch eine Variante,
- Figur 10: die perspektivische Ansicht des in Figur 9 eingesetzten Klinkenfreilaufs und
- Figur 11: die vergrößerte Stirnansicht des Klinkenfreilaufs der Figur 10.

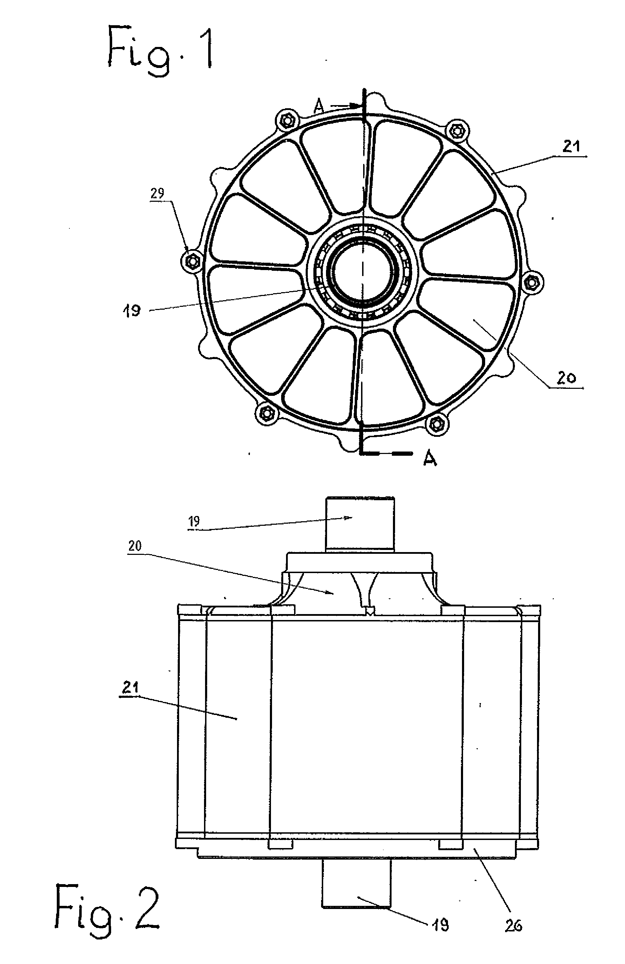

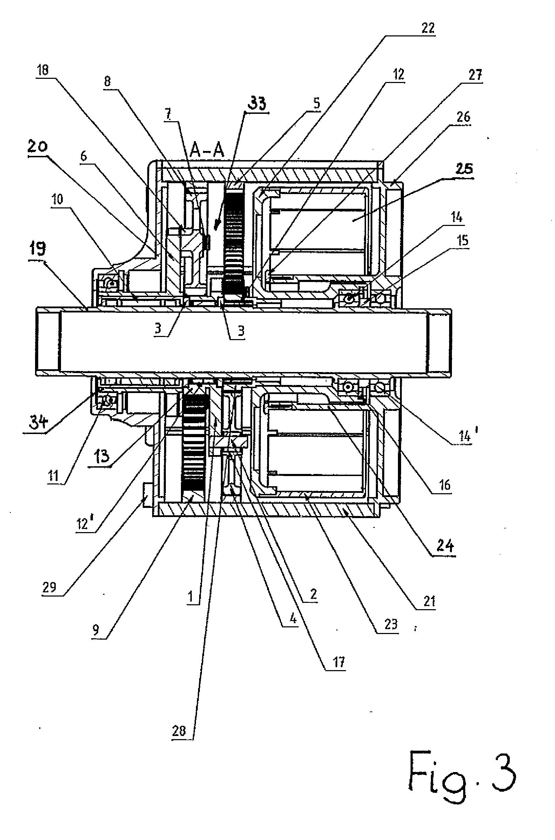

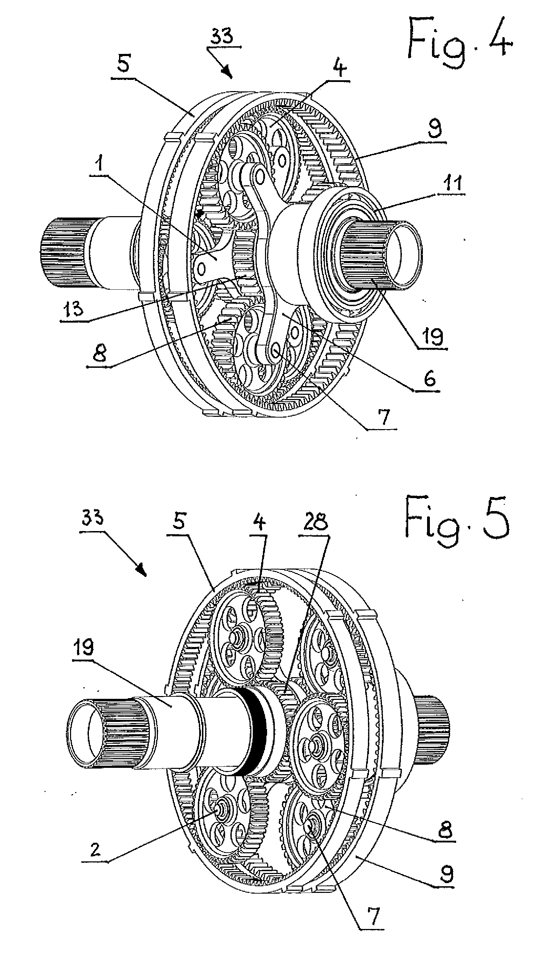

Die Figuren 1 bis 3 zeigen ein im Wesentlichen zylindrisches Gehäuse 21, das auf jeder Seite durch einen Deckel 20 bzw. 26 abgeschlossen und im Bereich des Tretlagers an einem nicht gezeigten Rahmen eines Fahrzeugs, z. B. Fahrrads angebracht ist. Die Deckel 20 und 26 sind über Zylinderschrauben 29 am Gehäuse 21 befestigt. In dem Gehäuse 21 sind, wie aus Figur 3 hervorgeht, einerseits ein Elektromotor 25 und andererseits ein in den Figuren 4 und 5 näher dargestelltes, zweistufiges Untersetzungsgetriebe 33 untergebracht, das hier aus einem zweistufigen Planetengetriebe besteht. Der Elektromotor 25 ist wegen des verhältnismäßig hohen Drehmomentes vorzugsweise ein Außenläufermotor, dessen Statorträger 24 mit Verschraubung 27 Teil des in Figur 3 rechten Gehäusedeckels 26 ist.

Der Rotorträger 22 mit Rückschlussring 23 des Motors 25 ist über ein Kugellager 14 auf der Tretlagerwelle 19 (Innenlagerachse) gelagert, die ihrerseits über ein Kugellager 14' im Gehäusedeckel 26 drehbar gelagert ist. Der Außenring des Kugellagers 14 ist durch einen Sicherungsring 16 axial fixiert. Zwischen den beiden Kugellagern 14 und 14' ist eine Distanzhülse 15 angeordnet.

Auf der Tretlagerwelle 19 ist über einen Nadelkranz 12 das im Rotorträger 22 befestigte Antriebsrad 28 der in Figur 3 rechten Planetenradstufe (1. Getriebestufe) gelagert. In Figur 5 ist das Antriebsrad 28 perspektivisch zu erkennen. Mit diesem kämmen drei Planetenräder 4 der ersten Getriebestufe, die sich auf der Innenverzahnung des im Gehäuse 21 drehfest angebrachten Hohlrades 5 der ersten Getriebestufe abwälzen. In den Figuren 3 und 4 ist der sternförmige Planetenträger 1 dargestellt, auf dessen Lagerzapfen 2 die Planetenräder 4 gelagert sind. Er ist, wie Figur 3 zeigt, einstückig mit dem Abtriebsrad 13 der zweiten Getriebestufe ausgebildet, mit dessen Außenverzahnung die Planetenräder 8 der zweiten Getriebestufe kämmen (Figur 4). Diese hat ebenfalls ein Hohlrad 9, welches drehfest in dem Gehäuse 21 angebracht ist und auf dessen Innenverzahnung sich die drei Planetenräder 8 der zweiten Getriebestufe abwälzen, die über Lagerzapfen 7 mit Nadelkränzen 18 auf dem Planetenträger 6 gelagert sind. Das Abtriebsrad 13 ist zwischen zwei Anlaufscheiben 3 über einen weiteren Nadelkranz 12' auf der Tretlagerwelle 19 gelagert.

Der Planetenträger 6 der zweiten Getriebestufe hat einen zylindrischen Fortsatz 34, der über ein Kugellager 11 in dem in Figur 3 linken Gehäusedeckel 20 drehbar gelagert ist. Der Fortsatz 34 des Planetenträgers 6 ist über einen Freilauf 10 (Hülsenfreilauf) mit der Tretlagerwelle 19 in Wirkverbindung, auf die bei zugeschaltetem Motor 25 der Planetenträger 6 der zweiten Getriebestufe in einer Drehrichtung das Drehmoment von dem Motor 25 auf die Tretlagerwelle 19 überträgt. Auf diese ist ein nicht gezeigtes Kettenrad aufgezogen, von dem über eine Kette das Hinterrad des Fahrrads angetrieben wird.

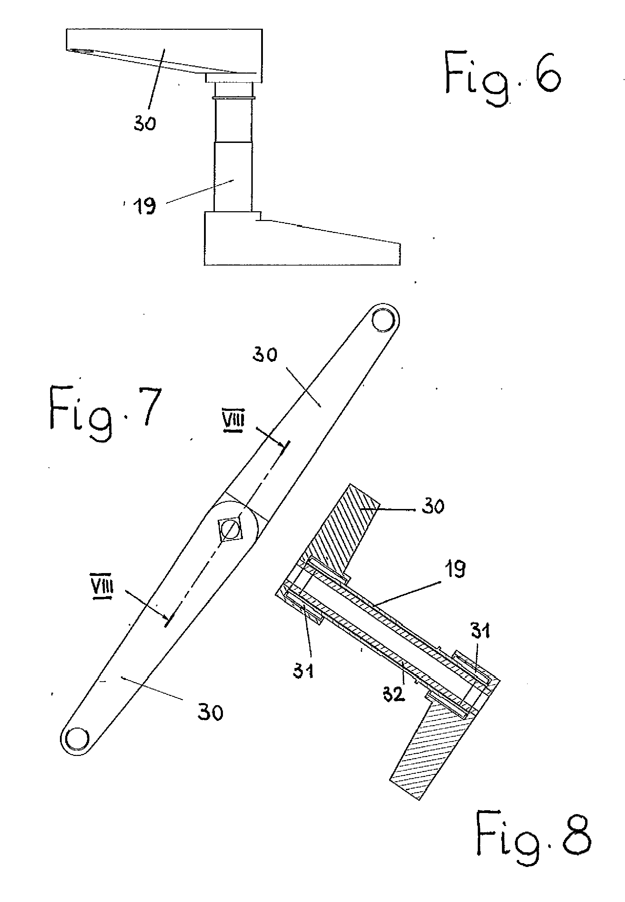

Die Figuren 6 bis 8 zeigen eine Weiterentwicklung der Erfindung mit einem Tretkurbelfreilauf.

Nach dem Stand der Technik sind bisher die beiden Tretkurbeln fest mit der Tretlagerwelle verbunden. Wenn diese durch einen Elektromotor angetrieben wird, hat das den Nachteil, dass immer mitgetreten werden muss. Erst durch Abschalten des Elektromotors kann das Pedalieren eingestellt werden.

Dieser Nachteil wird gemäß der Weiterbildung der Erfindung dadurch vermieden, dass die beiden rechts und links vorgesehenen Tretkurbeln 30 über jeweils einen Freilauf 31 auf der Tretlagerwelle 19 gelagert sind. Hierzu ist in die hohle Tretlagerwelle 19 koaxial eine Gleichlaufwelle 32 eingesetzt, auf der die beiden Tretkurbeln 30 über ihre Freiläufe 31 gelagert sind. Diese sorgen für eine Entkoppelung vom Motor 25, um ein Mitdrehen der Tretkurbeln 30 zu verhindern.

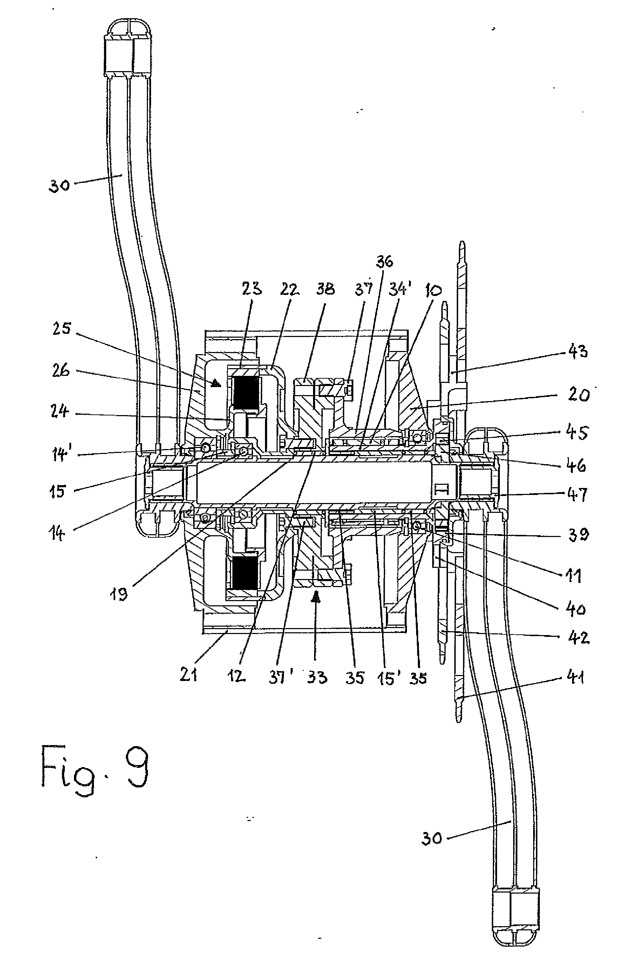

Bei der Variante der Figuren 9 bis 11 haben die mit der oben beschriebenen Konstruktion übereinstimmenden Bauteile dieselben Bezugsziffern.

Der grundsätzliche Aufbau der Tretlagereinheit der Figur 9 entspricht demjenigen der Figur 3. Auch hier ist ein Einwellensystem verwirklicht, bei dem das Untersetzungsgetriebe 33 jedoch als Harmonic Drive ausgebildet ist. Dies hat gegenüber einem Planetengetriebe den Vorteil eines einfacheren Aufbaus ohne eine Vielzahl von Stirnzahnrädern.

Figur 9 zeigt, dass der Elektromotor 25 mit seinem Statorträger 24 einstückig mit dem Gehäusedeckel 26 ausgebildet ist. Das Gehäuse 21 ist auf der gegenüberliegenden Seite durch den weiteren Deckel 20 abgeschlossen. Innerhalb des Gehäusedeckels 26 ist über das Kugellager 14' die hohle Tretlagerachse 19 gelagert, deren gegenüberliegendes Ende im Bereich des Gehäusedeckels 20 über zwei durch eine Distanzhülse 15' voneinander getrennte Nadelkränze 35 in einem zylindrischen Träger 34' eines Hülsenfreilaufs 10 radial gelagert ist. Der zylindrische Träger 34' des Hülsenfreilaufs 10 ist über das Kugellager 11 im Gehäusedeckel 20 gelagert und steht in Wirkverbindung mit der Abtriebsglocke 36 des Untersetzungsgetriebes 33 (Harmonic Drive), die durch Zylinderschrauben 37 am Getriebeausgang angebracht ist. Ebenfalls über Zylinderschrauben 37' ist der Eingang 38 des Harmonic Drive mit dem Rotorträger 22 verbunden, der über das Kugellager 14 drehbar auf der Tretlagerachse 19 radial abgestützt ist. Zur Lagerung des Untersetzungsgetriebes 33 auf der Tretlagerachse 19 dient ein Nadelkranz 12.

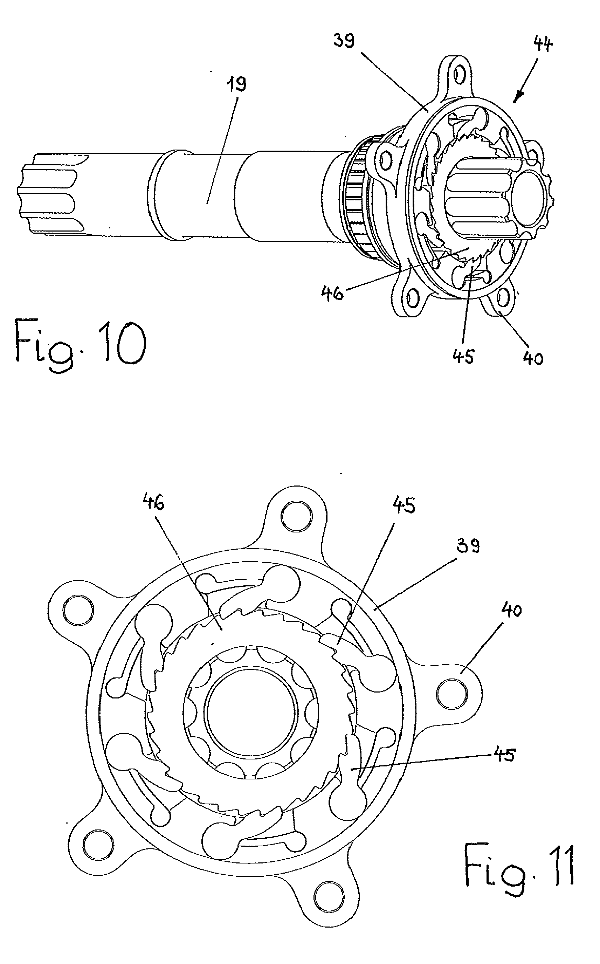

Der Freilaufträger 34' ragt am in Figur 9 rechten Ende aus dem Gehäusedeckel 20 heraus und geht dort in einen Flansch 39 über. Dieser hat, wie die Figuren 10 und 11 zeigen, radial abstehende Arme 40, an denen zwei Kettenräder 41, 42 unterschiedlichen Durchmessers befestigt sind, denen ein Kettenradadapter 43 zugeordnet ist.

Wie die Figuren 10 und 11 weiter zeigen, ist der Flansch 39 Teil eines Klinkenfreilaufs 44 mit über dem Umfang verteilt angeordneten Klinken 45, die mit den Zähnen eines Klinkenrings 46 zusammenwirken, der auf der Tretlagerachse 19 für den Antrieb in einer Drehrichtung angebracht ist.

An den beiden Enden der Tretlagerachse 19 ist über jeweils eine Kurbelschraube 47 ein Kurbelarm 30 befestigt.

Aus der obigen Beschreibung der Variante der Figuren 9 bis 11 ergibt sich, dass der Freilaufträger 34' durch seinen Flansch 39 mit den beiden Kettenrädern 41, 42 fest verbunden ist und dass die Tretlagerachse 19 mit ihren daran angebrachten Pedal-oder Kurbelarmen 30 über den Hülsenfreilauf 10 in Wirkverbindung mit dem Freilaufträger 34' ist. Der Elektromotor 25 ist über das Getriebe 33 und den Hülsenfreilauf 10 in Verbindung mit dem Freilaufträger 34'. Sämtliche Bauelemente sind auf der Tretlagerachse 19 gelagert.

Der Elektromotor 25 treibt über das Untersetzungsgetriebe 33 (Harmonic Drive) den daran durch die Schrauben 37 befestigten Abtriebsstern und die einstückig damit ausgebildete Abtriebsglocke 36 an. Diese treibt über den Hülsenfreilauf 10 den Freilaufträger 34' und damit den Flansch 39 an, an dem die Kettenräder 41, 42 befestigt sind.

Der zweite Übertragungsweg geht von den Pedalen aus. Die beiden Tretkurbeln 30 treiben über die Innenlagerachse 19 und den Klinkenfreilauf 44, bestehend aus dem Klinkenring 46 und den Klinken 45, den Freilaufträger 34' an, der - wie oben erläutert - mit den Kettenrädern 41, 42 verbunden ist.

Die Tretlagereinheit ermöglicht somit drei Betriebsweisen:
1. Fahrbetrieb nur durch den Elektromotor, so dass die Welle 19 mit den Tretkurbeln 30 in Ruhestellung ist,
2. Fahrbetrieb nur durch Treten der Pedale, Motor und Getriebe sind in Ruhestellung,
3. Kombination aus 1 und 2.

## Patentansprüche

1. Tretlagereinheit mit Elektromotorunterstützung für Kleinfahrzeuge, insbesondere Fahrräder oder Dreiräder, umfassend eine Tretlagerwelle (19) mit daran angebrachten Tretkurbeln (30), **dadurch gekennzeichnet, dass** auf der Tretlagerwelle (19) ein Elektromotor (25) mit einem damit gekoppelten Untersetzungsgetriebe (33) gelagert ist, die beide in einem gemeinsamen Gehäuse (21) untergebracht sind, das mit der Tretlagerwelle (19) eine Einheit bildet.

2. Tretlagereinheit nach Anspruch 1, **dadurch gekennzeichnet, dass** das Untersetzungsgetriebe (33) ein Planetengetriebe ist.

3. Tretlagereinheit nach Anspruch 2, **dadurch gekennzeichnet, dass** das Planetengetriebe zweistufig ausgeführt ist, wobei jede Stufe ein in dem Gehäuse (21) fixiertes Hohlrad (5, 9) hat, mit dem ein Planetenradsatz (4, 8) kämmt, dessen Planetenträger (1, 6) auf der gemeinsamen Welle (19) gelagert ist.

4. Tretlagereinheit nach Anspruch 3, **dadurch gekennzeichnet, dass** jede Planetenradstufe ein Übersetzungsverhältnis von 1 : 4 hat, so dass das Gesamtübersetzungsverhältnis 1:16 beträgt.

5. Tretlagereinheit nach Anspruch 1, **dadurch gekennzeichnet, dass** das Untersetzungsgetriebe (33) ein Magnetgetriebe oder ein Harmonic Drive ist.

6. Tretlagereinheit nach einem der vorhergehenden Ansprüche, **dadurch gekennzeichnet, dass** zwischen das Untersetzungsgetriebe (33) und die Welle (19) ein Freilauf (10) geschaltet ist.

7. Tretlagereinheit nach Anspruch 6, **dadurch gekennzeichnet, dass** der Freilauf (10) als Hülsenfreilauf ausgebildet ist.

8. Tretlagereinheit nach Anspruch 6 oder 7, **dadurch gekennzeichnet, dass** der Freilauf (10) mit einem Klinkenfreilauf (44) verbunden ist, der mit Kettenrädern (41, 42) verbunden ist.

9. Tretlagereinheit nach Anspruch 8, **dadurch gekennzeichnet, dass** der Freilaufträger (34') des Freilaufs (10) einen daran ausgebildeten Flansch (39) hat, an dem die Kettenräder (41, 42) befestigt sind.

10. Tretlagereinheit nach einem der vorhergehenden Ansprüche, **dadurch gekennzeichnet, dass** ein weiterer Freilauf (31) zwischen die Welle (19) und die zugehörige Tretkurbel (30) geschaltet ist.

11. Tretlagereinheit nach Anspruch 10, **dadurch gekennzeichnet, dass** in die hohle Tretlagerwelle (19) koaxial eine Gleichlaufwelle (32) eingesetzt ist, auf der die beiden Tretkurbeln (30) über ihre Freiläufe (31) gelagert sind.
